# EUROPEAN PATENT APPLICATION

(11) **EP 3 439 139 A1**
(43) Date of publication of application: **06.02.2019**
(21) Application number: 17184003.6
(22) Date of filing: 31.07.2017
(51) Int. Cl.: H02J 13/00

(54) **SMART DEVICE CHARGING IN HOTELS**

(71) Applicant: Vestel Elektronik Sanayi ve Ticaret A.S., 45030 Manisa (TR)
(72) Inventor: YILDIZ, Kadir, 45030 Manisa (TR); ER, Alper Sait, 45030 Manisa (TR)
(74) Representative: Ascherl, Andreas

(57) **Abstract**

The present invention refers to a control unit (105) for controlling electric energy flow, in particularly for providing electric energy to an output line for charging a smart device. Said control unit (105) comprises at least an input means for coupling with an electric input line, a first output means for coupling with a first electric output line, a second output means for coupling with a second electric output line, a detection means for detecting a pattern of electric power flow through at least the first output means, multiple switches for cutting off electric energy flow from the input means to at least multiple and preferably all output means in dependency of an external event, wherein cutting off electric energy flow through at least one of said multiple output means is preventable in case the pattern of electric power flowing through said output means matches with a predefined pattern.

## Description

The present invention refers according to claim 1 to a control unit for controlling electric energy flow, according to claim 4 to a system for distribution of electric energy to a smart device, according to claim 9 to a room, according to claim 12 to a building and according to claim 13 to a method for distribution of electric energy to a smart device.

### Background of the invention

Document US2011251807A1 discloses devices and methods for identifying an electrical device, and its state, in a network of electrical devices are disclosed. An energy monitoring device is programmed to identify an electrical device coupled to a power supply, and a state of the electrical device, from a change in successive measurements of the power supply. Algorithms for determining a load signature for an electrical device and its state are disclosed. A stored table of load signatures for states is used to identify devices, and states. Energy monitoring information is collected and presented to the user on a display, a remote display, or is transmitted over a network to a remote device such as a personal computer, personal digital assistant, a cell phone, voice mail, email, or text message.

Document US2001011765A1 discloses a switch for an energy management system. The switch is of the general type comprising a housing and a key card, the housing having an opening for insertion of the key card and a switch means triggered by the presence of the key card. The switch means controls access to at least one energy consuming service. The housing includes at least one magnetically linked reading switch that recognizes magnetically responsive portions on the key card to prevent it being replaced by an imitation card.

Thus, special systems are used in the room networks of the hotels that are preferred by many people for vacations or at business trips. Electrical system of the hotel room is activated by the customers using card-like devices. So, when customer leaving from the room with card-like device, all the energy in the room can be cut off. This helps with respect to issues like overall safety and energy consumption. However, due to this system, if customer wants to charge the phone with connecting the charge adaptor to the power outlet; smart phone is de-energized when the customer leaves the room with removing the card. So, the phone would not be charged.

### Object of the invention

Thus, it is the object of the present invention to provide an alternative solution that enables charging of smart devices even in case no guest is inside the hotel room.

### Description of the invention

The before mentioned object is solved according to claim 1 by a control unit for controlling electric energy flow, in particularly for providing electric energy to an output line for charging a smart device. Said control unit preferably comprises at least an input means for coupling with an electric input line however it is alternatively possible that multiple input means for connecting to multiple input lines are present, in one case matches the number of input lines with the number of output lines, a first output means for coupling with a first electric output line, a second output means for coupling with a second electric output line, a detection means for detecting a pattern of electric power flow through at least the first output means, multiple switches for cutting off electric energy flow from the input means to at least multiple and preferably all output means in dependency of an external event, wherein cutting off of electric energy flow through at least one of said multiple output means is preventable in case the pattern of electric power flowing through said output means matches with a predefined pattern. That means, the switch function of switches associated with individual output means can be preferably deactivated or set in an open or closed configuration in dependency of the detected electric energy flow pattern. The switches can be controlled by the detection means or a further processor means. This solution is beneficial since infrastructure like hotel rooms can be upgraded in an easy manner by installing such a control unit. Thus, the overall comfort of the guests is increased, since they do not need to wait in the hotel room until the smart device, like smart watch or smart phone or tablet PC, is sufficiently charged.

Further preferred embodiments are subject-matter of the following specification passages and/or the claims.

According to a preferred embodiment of the present invention a main power on input port is provided for receiving data or signals or electric energy in dependency of the external event, wherein the switches are actuated to enable electric energy flow through all output means in case data or signals or electric energy is received via the main power on input port. This embodiment is beneficial since the signal or data or electric energy can be provided by means of a cable or in a wireless manner, in particularly by means of RFID.

The detection means is according to a further preferred embodiment of the present invention configured to detect patterns of electric power flowing through multiple output means. In case multiple output means are present it is possible that each of said output means can be timewise selected as first output means respectively as output means though which electric energy flow is enabled while the main switch element is switched to a power off configuration. It is further possible that multiple or all output means are timewise selected as output means though which electric energy flow is enabled while the main switch element is switched to a power off configuration. This embodiment is beneficial since one control unit can be used to enable charging of smart devices at multiple output lines respectively power lines in one room.

The before mentioned object is also solved by a system for distribution of electric energy to a smart device according to claim 4. Said system preferably comprises at least a main switch element for switching on an electric energy distribution to a predefined number of electric output lines and for switching off the electric energy distribution to said electric output lines and a control unit for controlling electric energy flow, in particularly for providing electric energy to an output line for charging a smart device. The control unit preferably comprises an input means for coupling with an electric input line, a first output means for coupling with a first electric output line, a second respectively multiple further output means for coupling with a second respectively multiple further electric output line/s, a detection means for detecting a pattern of electric power flow through at least the first output means and for comparing the detected pattern of electric power flow with at least one stored pattern and multiple switches for cutting off electric energy flow from the input means to at least multiple and preferably all output means in dependency of an actuation, in particularly switching off, of the main switch element. The detection means can read the signals sent by the smart phone and the cell phone algorithm that sends the signal to the control device by cutting the energy in a specific order into any power outlet. The system further preferably comprises at least one smart device connected via a charging unit to the first output line, wherein the smart device runs an application or operating system that causes the charging unit to charge the smart device according to a predefined pattern. Cutting off of electric energy flow through the first output means is prevented in case the pattern of electric power flowing through said output means during charging of the smart device matches with the stored pattern. The stored pattern/s is/are preferably stored as data in the detection means or in a processing means. It is further possible that the control unit comprises a LAN or internet connection, in particularly for updating the stored pattern/s. The control unit and the application running on the smartphone are preferably both connected to a cloud based service. This solution is beneficial since the smart devices can be distinguished in a reliable manner from other electronic devices, like TV or lamp.

The detection means detects according to a further preferred embodiment of the present invention voltage and/or current in dependency of time. The detection means preferably can comprise a voltmeter and/or an ammeter. This embodiment is beneficial since variations of the flow of electric energy caused by the smart device respectively a charging unit can be detected in a reliable manner.

The main switch element is coupled according to a further embodiment of the present invention to a main power on input port of the control unit for receiving data or signals or electric energy in dependency of the external event, wherein the switches are actuated to enable electric energy flow through all output means in case data or signals or electric energy is received via the main power on input port. This embodiment is beneficial since a functional interaction between the main switch element, the control unit and the smart device is possible.

The main switch element comprises according to another embodiment of the present invention a slot for inserting or removing of a key card, in particularly a RFID card, wherein the main power is switched on in case the key card is inserted into the slot and wherein the main power is switched of in case the key card is removed from the slot. This embodiment is beneficial since such key cards are very small, in particularly the size of credit cards, and fit into wallet. Thus, carrying the key card does not bother the user.

The control unit and the main switch element are according to a further embodiment arranged in a common housing. This embodiment is beneficial since the switch element belongs to the control unit. Thus, installation of the control unit directly leads to the installation of the main switch element

The before mentioned object is also solved by a room according to claim 9. Said room, comprises a main switch element for switching on an electric energy distribution to a predefined number of electric output lines and for switching off the electric energy distribution to said electric output lines, wherein the main switch element is arranged at a wall. The room further comprises a control unit for controlling electric energy flow, in particularly for providing electric energy to an output line for charging a smart device. The control unit preferably comprises an input means for coupling with an electric input line, a first output means for coupling with a first electric output line, a second output means for coupling with a second electric output line, a detection means for detecting a pattern of electric power flow through at least the first output means and for comparing the detected pattern of electric power flow with at least one stored pattern, multiple switches for cutting off electric energy flow from the input means to at least multiple and preferably all output means in dependency of an actuation, in particularly switching off, of the main switch element. The room further comprises at least one plug for connecting a smart device via a charging unit to the first output line. Cutting off of electric energy flow through the first output means is hereby preferably prevented in case the pattern of electric power flowing through said output means during charging of a smart device via said plug matches with the stored pattern. This solution is beneficial since such hotel rooms provide much more comfort to guests. Therefore, it is possible due to the present invention that in the absence of the card-like device, in particularly a key card, which activates electrical system in the hotel room, it will be possible to detect that a phone is charging with the which power outlet it is connected and also not to cut off the energy in that power outlet.

According to another embodiment of the present invention multiple output lines are connected to multiple output means of the control unit, wherein each line comprises at least or exactly one plug for connecting an electric device. In particularly three or more than three output lines connected to respective output means of the control unit are provided, wherein each line comprises at least or exactly one plug for connecting an electric device. This embodiment is beneficial since multiple smart devices can be charged at the same time.

The before mentioned object is also solved by a building according to claim 12, in particularly hotel. Said building preferably comprises one or at least multiple herein described rooms.

The before mentioned object is also solved by a method for distribution of electric energy to a smart device according to claim 13. Said method preferably comprises at least the steps operating a main switch element for switching on an electric energy distribution to a predefined number of electric output lines or for switching off the electric energy distribution to said electric output lines, and detecting pattern of electric power flow by means of a detection means of a control unit through at least the first output means and for comparing the detected pattern of electric power flow with at least one stored pattern. The control unit preferably comprises at least an input means for coupling with an electric input line, a first output means for coupling with a first electric output line, a second output means for coupling with a second electric output line, multiple switches for cutting off electric energy flow from the input means to at least multiple and preferably all output means in dependency of an actuation, in particularly switching off, of the main switch element. The method preferably further comprises the step of operating of at least one device, in particularly smart device, connected via a charging unit to the first output line, wherein the device, in particularly smart device, runs an application or operating system that causes the charging unit to charge the device, in particularly smart device, according to a predefined pattern, wherein cutting off of electric energy flow through the first output means is prevented in case the pattern of electric power flowing through said output means during charging of the device, in particularly smart device, matches with the stored pattern. This embodiment is beneficial since smart devices can be charged even in case a main switch element switches the power distribution to an off-state.

The detection device detects the pattern according to a further embodiment of the present invention while the main switch element causes full power distribution, in particularly while the key card is inserted in the main switch element, wherein prevention of cutting off the electric energy flow to the first output line takes place while or after the main switch element causes switching off of the electric energy distribution, in particularly while the key card is removed from the main switch element. This embodiment is beneficial since the users / guests are at first inside a room, thus a power distribution is switched on, thus the system can analyze if smart devices are coupled to any electric output line. In case one smart device is detected or in case multiple smart devices are detected the system causes the switches inside the control unit not to disconnect the respective output lines from an electric energy source, in particularly form the input means.

The method preferably comprises according to another embodiment of the present invention the step of detecting multiple patterns of electric power flowing through multiple output means at the same time and the step of preventing cutting off of electric energy flow through multiple output means in case the multiple patterns of electric power flowing through the output means during charging of multiple smart devices match with stored pattern/s.

Further benefits, goals and features of the present invention will be described by the following specification of the attached figure, in which exemplarily components of the invention are illustrated. Components of the device and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawing

- Fig. 1: exemplarily shows components of the system according to the present invention;
- Fig. 2: exemplarily shows steps of the system according to the present invention; and
- Fig. 3: exemplarily shows further steps of the system according to the present invention.

### Detailed Description of the Drawing

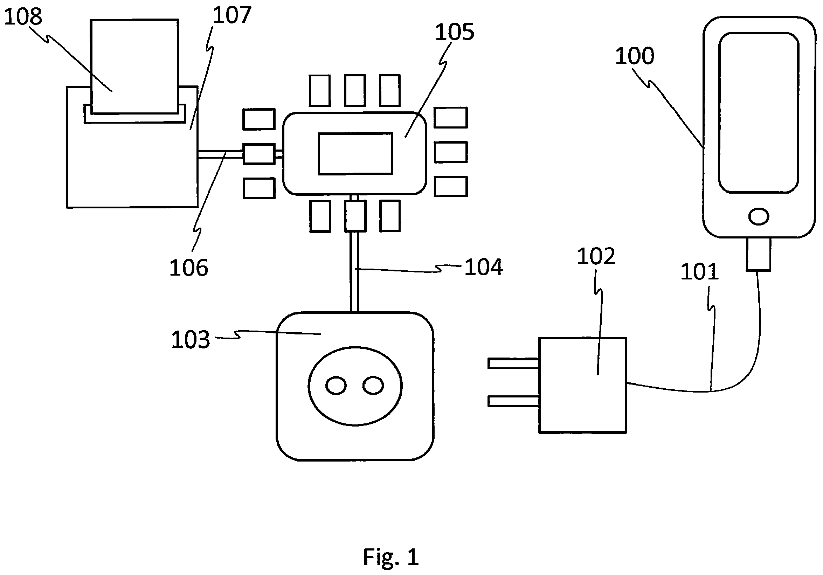

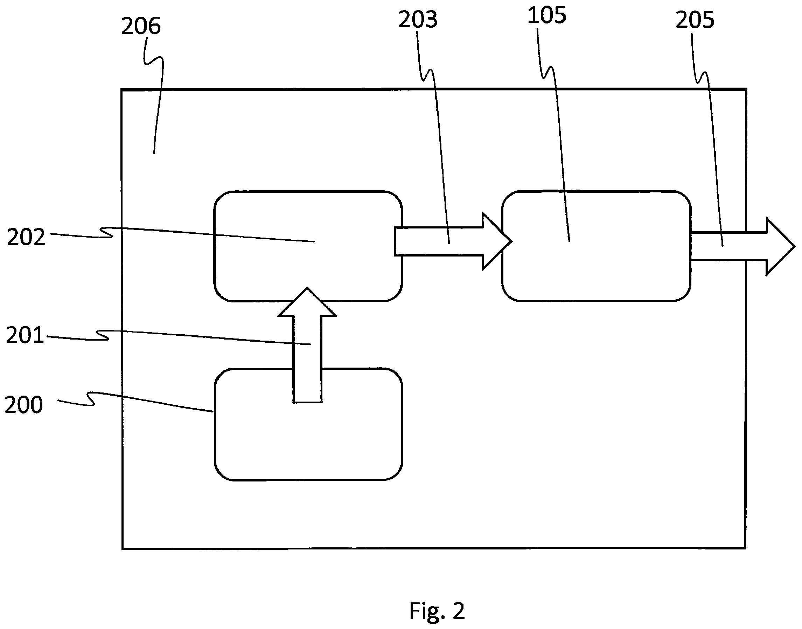

Fig. 1 shows an embodiment of the present invention, wherein the embodiment includes a smart device, in particularly a smart phone 100, a cell phone/smart device charger adaptor 102, power outlet 103, a room power controller unit respectively control unit 105, a data or signal or electric energy or electromagnetic field connection 106 and a card slot respectively a main switch element 107 functioning as a switch for power system of the room 206 respectively room power system (cf. fig. 2).

Smart device 100 has a special application which activates a special mode, in particularly a hotel room mode, for the smart device. This application is preferably automatically or manually, activated when the smart device is connected to the charge adaptor 102 via charge line 101. While the charger is connected to the power outlet 103 and the smart device is charged, this application turns on and off the charging process or modifies the charging process of the smart phone for a certain period of time. Preferably the majority or some or all power lines are connected to the hotel room power control unit respectively the control unit 105 as the power line 104 to the power outlet which is used for charging. Control unit 105 includes a hardware circuits, memory units, processor and a software running on the processor respectively processor means. Control unit 105 detects the certain power interruptions which are done by the application. Control unit 105, in particular a detection means of control unit 105, senses the interruptions on the power line and decides that there is a smart device, in particularly phone on charging in that power line. Control unit 105 preferably keeps the power line information into its memory unit. Control unit communicates via line 106 with the card slot 107 respectively main switch element which is functioning as a switch for power system of the room. If the card respectively key card is removed from the card slot, controller unit 105 senses it and cuts the room power except the power line 104 which supplies electric energy to the smart device charger. So, smart phone charge respectively smart device charger will not be cut off and will be charged continuously after the card is removed from the card slot.

According to fig. 2 the inventive system includes a smart device, in particularly a smart phone, which has a special application 200 or operating system running on it. This operating system or application 200 preferably automatically activates a hotel room mode for the smart device, in particularly smart phone. While the cell phone respectively smart phone is connected to the charger unit 202 via charge line 201, this application turns on and off the charging process of the smart device, in particularly cell phone, for a certain period of time, in particularly in a predefined sequence. These certain interruptions on the power line respectively output line 203 to which that phone charger respectively charging unit is connected are detected by the room power control unit respectively control unit 105. Control unit senses the interruptions and decides that there is a phone which is charged in that power line. If the key card is removed from the card slot 107 which is functioning as a switch for the power system of the room, control unit lets this power line to be active. So, the system outputs according to arrow 205 a continuous power to the power line to which the smart device charger 202 respectively charging unit is connected even if the key card 108 is removed from the card slot 107 respectively main switch element.

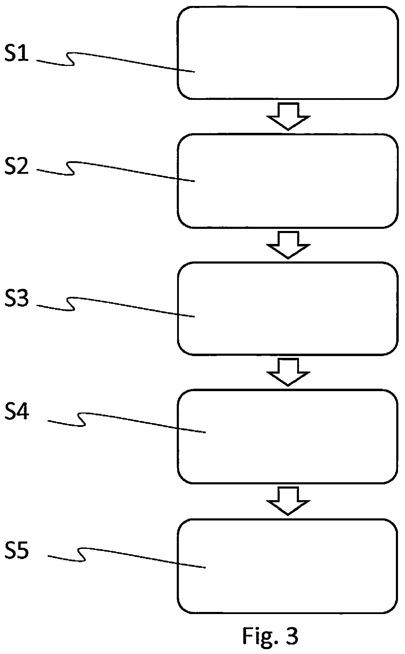

Fig. 3 shows multiple steps S1-S5 of the inventive method. According to S1 a smart device, in particularly smart phone, hotel room mode application is turned on after or before the device is connected to a charger unit. The application turns according to step S2 the charging process of the smart device on and off, in particularly for a predefined respectively certain period of time. It is further possible that this s repeated, in particularly automatically, after a predefined time. Step S3 indicates that certain interruptions of the charging process are detected by the control unit, in particularly detecting means. Step S4 indicates that the control unit 105 lets the respective power line to be active and provides preferably continuous power if the key card is removed from the main switching element, in particularly card slot. Step S5 indicates that the smart device will be charged continuously via that specific power line respectively output line.

Thus, the present invention refers to a control unit 105 for controlling electric energy flow, in particularly for providing electric energy to an output line for charging a smart device. Said control unit 105 comprises at least an input means for coupling with an electric input line, a first output means for coupling with a first electric output line, a second output means for coupling with a second electric output line, a detection means for detecting a pattern of electric power flow through at least the first output means, multiple switches for cutting off electric energy flow from the input means to at least multiple and preferably all output means in dependency of an external event, wherein cutting off electric energy flow through at least one of said multiple output means is preventable in case the pattern of electric power flowing through said output means matches with a predefined pattern.

### List of reference numbers

- 100: smart device
- 101/201: charging line
- 102/202: charging unit
- 103: power outlet
- 104: power line
- 105: control unit
- 106: communication line
- 107: main switching element
- 108: key card
- 200: application or operating system
- 203: output line
- S1-S5: steps 1-5

## Claims

1. Control unit (105) for controlling electric energy flow, in particularly for providing electric energy to an output line for charging a smart device,
at least comprising
an input means for coupling with an electric input line,
a first output means for coupling with a first electric output line,
a second output means for coupling with a second electric output line,
a detection means for detecting a pattern of electric power flow through at least the first output means,
multiple switches for cutting off electric energy flow from the input means to at least multiple and preferably all output means in dependency of an external event,
wherein cutting off electric energy flow through at least one of said multiple output means is preventable in case the pattern of electric power flowing through said output means matches with a predefined pattern.

2. Control unit according to claim 1,
**characterized by**
a main power on input port for receiving data or signals or electric energy in dependency of the external event, wherein the switches are actuated to enable electric energy flow through all output means in case data or signals or electric energy is received via the main power on input port.

3. Control unit according to claim 2,
**characterized in that**
the detection means is configured to detect patterns of electric power flowing through multiple output means.

4. System for distribution of electric energy to a smart device (100),
at least comprising
a main switch element (107) for switching on an electric energy distribution to a predefined number of electric output lines and for switching off the electric energy distribution to said electric output lines,
and
a control unit (105) for controlling electric energy flow, in particularly for providing electric energy to an output line for charging a smart device,
wherein the control unit (105) comprises at least:
an input means for coupling with an electric input line,
a first output means for coupling with a first electric output line,
a second output means for coupling with a second electric output line,
a detection means for detecting a pattern of electric power flow through at least the first output means and for comparing the detected pattern of electric power flow with at least one stored pattern,
multiple switches for cutting off electric energy flow from the input means to at least multiple and preferably all output means in dependency of an actuation, in particularly
switching off, of the main switch element,
and
at least one smart device connected via a charging unit to the first output line,
wherein the smart device (100) runs an application or operating system (200) that causes the charging unit to charge the smart device (100) according to a predefined pattern,
wherein cutting off of electric energy flow through the first output means is prevented in case the pattern of electric power flowing through said output means during charging of the smart device (100) matches with the stored pattern.

5. System according to claim 4,
**characterized in that**
the detection device detects voltage and/or current in dependency of time.

6. System according to claim 4 or 5,
**characterized in that**
the main switch element (107) is coupled to a main power on input port of the control unit for receiving data or signals or electric energy in dependency of the external event, wherein the switches are actuated to enable electric energy flow through all output means in case data or signals or electric energy is received via the main power on input port.

7. System according to claims 4 to 6,
**characterized in that**
the main switch element (107) comprises a slot for inserting or removing of a key card (108), in particularly a RFID card, wherein the main power is switched on in case the key card (108) is inserted into the slot and wherein the main power is switched of in case the key card is removed from the slot.

8. System according to claim 7,
**characterized in that**
the control unit (105) and the main switch element (107) are arranged in a common housing.

9. Room (206) within a building,
comprising
a main switch element (107) for switching on an electric energy distribution to a predefined number of electric output lines and for switching off the electric energy distribution to said electric output lines,
wherein the main switch element (107) is preferably arranged at a wall,
and
a control unit (105) for controlling electric energy flow, in particularly for providing electric energy to an output line for charging a smart device (100),
wherein the control unit (105) comprises at least:
an input means for coupling with an electric input line,
a first output means for coupling with a first electric output line,
a second output means for coupling with a second electric output line,
a detection means for detecting a pattern of electric power flow through at least the first output means and for comparing the detected pattern of electric power flow with at least one stored pattern,
multiple switches for cutting off electric energy flow from the input means to at least multiple and preferably all output means in dependency of an actuation, in particularly switching off, of the main switch element,
and
at least one plug for connecting a smart device (100) via a charging unit to the first output line,
wherein cutting off of electric energy flow through the first output means is prevented in case the pattern of electric power flowing through said output means during charging of a smart device via said plug matches with the stored pattern.

10. Room according to claim 9,
**characterized in that**
multiple output lines connected to multiple output means of the control unit (105),
wherein each line comprises at least or exactly one plug for connecting an electric device.

11. Room according to claim 10,
**characterized in that**
three or more than three output lines connected to respective output means of the control unit (105) are provided, wherein each line comprises at least or exactly one plug for connecting an electric device.

12. Building, in particularly a hotel,
at least comprising
multiple rooms (200) according to claims 9 to 11.

13. Method for distribution of electric energy to a smart device (100),
at least comprising the steps
operating a main switch element (107) for switching on an electric energy distribution to a predefined number of electric output lines or for switching off the electric energy distribution to said electric output lines,
and
detecting pattern of electric power flow by means of a detection means of a control unit through at least the first output means and for comparing the detected pattern of electric power flow with at least one stored pattern,
wherein the control unit (105) comprises at least:
an input means for coupling with an electric input line,
a first output means for coupling with a first electric output line,
a second output means for coupling with a second electric output line,
multiple switches for cutting off electric energy flow from the input means to at least multiple and preferably all output means in dependency of an actuation, in particularly
switching off, of the main switch element,
and
operating of at least one smart device (100) connected via a charging unit to the first output line,
wherein the smart device (100) runs an application or operating system that causes
the charging unit to charge the smart device (100) according to a predefined pattern,
wherein cutting off of electric energy flow through the first output means is prevented in case the pattern of electric power flowing through said output means during charging of the smart device (100) matches with the stored pattern.

14. Method according to claim 13,
**characterized in that**
the detection device detects the pattern while the main switch element (107) causes full power distribution, in particularly while the key card (108) is inserted in the main switch element,
wherein prevention of cutting off the electric energy flow to the first output line takes place while or after the main switch element (107) causes switching off of the electric energy distribution, in particularly while the key card is removed from the main switch element (107).

15. Method according to claim 13 or 14,
**characterized by**
the step of detecting multiple patterns of electric power flowing through multiple output means at the same time and
the step of preventing cutting off of electric energy flow through multiple output means in case the multiple patterns of electric power flowing through the output means during charging of multiple smart devices match with stored pattern.
